(19) Europäisches Patentamt
European Patent Office
Office européen des brevets

(11) Publication number: **0 276 080 B1**

(12) **EUROPEAN PATENT SPECIFICATION**

(45) Date of publication of patent specification: **10.06.92**

(51) Int. Cl.5: **C08G 18/66**, C08L 59/00

(21) Application number: **88300257.8**

(22) Date of filing: **13.01.88**

# (54) Process for producing polyoxymethylene-polyurethane type alloy.

(30) Priority: **23.01.87 JP 12294/87**

(43) Date of publication of application:
**27.07.88 Bulletin 88/30**

(45) Publication of the grant of the patent:
**10.06.92 Bulletin 92/24**

(84) Designated Contracting States:
**DE FR GB**

(56) References cited:
**EP-A- 0 167 369**
**US-A- 3 697 624**

**"Polyurethanes Chemistry and Technology" (Sauders,Frisch) Krieger Pub. USA 1983, p. 401**

**"Textbook of Polymer Science" (Billmeyer) Wiley Pub. USA 1971, p.237**

**"Properties of Polymers" (Krevelen), Elsevier Pub. NL, 1976, p.495**

(73) Proprietor: **NIPPON POLYURETHANE INDUSTRY CO. LTD.**
**2-8, Toranomon 1-chome**
**Minato-ku Tokyo(JP)**

(72) Inventor: **Yano, Noriyoshi**
**1-13, Zushi 7-chome**
**Zushi-shi Kanagawa-ken(JP)**
Inventor: **Fujita, Toshihiko**
**422-14, Kariba-cho Hodogaya-ku**
**Yokohama-shi Kanagawa-ken(JP)**

(74) Representative: **West, Alan Harry et al**
**R.G.C. Jenkins & Co. 26 Caxton Street**
**London SW1H 0RJ(GB)**

**EP 0 276 080 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a process for producing a polyoxymethylene-polyurethane alloy, and more particularly to a process which comprises allowing a polyisocyanate to react with polyols in the presence of a polyoxymethylene.

The product of the process of the invention is useful as an industrial construction material and for the manufacture of functional parts.

Oxymethylene homo- and copolymers (referred to below as polyoxymethylene or POM) have well balanced mechanical properties. Thus, they have good creep resistance as well as high elastic recovery, fatigue resistance, frictional resistance, chemical resistance and hot water resistance, and also good workability, and are therefore known as the engineering plastic of engineering plastics. They have been used steadily and progressively in fields of high precision assembly in the electrical, electronics and automobile industries and also in the precision mechanical engineering industries. However, they suffer the drawback of having inferior flexibility and impact resistance.

In contrast polyurethanes (referred to below as PU) have been used in various fields because of their excellent abrasion resistance, low temperature characteristics, flexibility and impact resistance, and their physical properties can be easily adjusted over a wide range from soft to hard depending upon the particular combination of constituent starting materials.

It has been proposed to make composites of POM and PU for uses such as gears for highly impact resistant but soft and quiet running gears, gears for ascending and descending windows in automobiles, and for ski bindings.

The composite formation methods of the prior art, however, are restricted in workability and applicability, and have the drawbacks of requiring many complicated steps in the preparation of the alloy product, that the molded products are tacky and that the strength of welded joints in molded products is extremely low.

The following specific methods have been proposed for making composites of POM and PU.

(1) Blend of POM and a thermoplastic polyurethane:

In order to obtain a highly impact resistant and soft material which does not lose the good essential properties of POM even if the elastic coefficient is reduced, it has been proposed to blend POM with a thermoplastic polyurethane (referred to below as TPU). However, since TPU is generally supplied as flakes or pellets of several mm in size, blends with POM in pellet or powder form have poor processability. Also, conventional TPU is poorly compatible with POM, and TPU with a hardness of 90° or higher according to Type A of JIS A K 6301 is substantially incompatible resulting in non-homogenous blends and consequential problems of the moulded product having insufficient mechanical strength and an unacceptable appearance.

If blending is effected with a prolonged kneading time, elevated kneading temperature and increased shear forces in order to increase homogeneity, formaldehyde will be generated by decomposition of POM to the detriment of the working environment.

Also, even if a homogenous POM-PU composite is obtained by use of a soft TPU, then depending on the conditions during injection molding, interlaminer peeling is liable to occur and the strength of the molded product is reduced.

(2) Modified oxymethylene polymer having POM and TPU coupled by polyisocyanate:

U.S. Patent 3,364,157 describes modified oxymethylene polymers which comprise oxymethylene polymer coupled with a dissimilar organic polymer having a terminal or pendant group containing active or acidic hydrogen as determined by the Zerewitnoff method, by a polyisocyanate or polythioisocyanate.

Here, TPU is used as the dissimilar organic polymer, but the resulting modified oxymethylene copolymer has low compatibility when the amount of TPU is high and depending on the composition, the molded product has a very poor appearance although impact resistance can be improved.

Further, molded and extruded products prepared from the modified oxymethylene copolymer have the drawback of being tacky.

(3) Preparation of modified oxymethylene copolymer in the presence of formaldehyde:

U.S. Patent No. 3,766,298 teaches the reduction of tackiness by producing a modified oxymethylene

copolymer by the method described in (2) in the presence of 10% by weight or less of formaldehyde based on the total reaction components.

In this case, similar to that of (1), formaldehyde is readily generated to damage the working environment. Also, since TPU is used, the production cost through all the steps will be disadvantageously high.

POM is a crystalline polymer, and excellent in workability due to its low melt viscosity but is inferior in impact resistance. PU is a thermoplastic resin which through pseudo-crosslinking by hydrogen bonds has a high melt viscosity and poor moldability, and leaves much to be desired in molding characteristics. Composite formation of POM-PU has been proposed, but the components have different essential properties, inherently poor compatibility and different behaviours during melting. Hence, even if they can be formulated uniformly by mechanical microdispersion, interlaminar separation is liable to occur in the places where high shearing forces arise such as during injection molding, and this may cause surface peeling or a lowering of the physical properties.

Even when POM and TPU are combined by the methods of U.S. Patents Nos. 3,364,157 and 3,766,298, POM segments and TPU segments can be coupled completely only with difficulty, and similar phenomena may occur.

For solving these problems, it is necessary to bond POM molecular chains and PU molecular chains by chemical or physical methods and also to select a PU composition having good compatibility with POM.

The present invention seeks to provide a method for obtaining an alloy of POM and PU having excellent physical properties and improved workability more simply than the methods of the prior art.

More specifically, the present invention provides a process for producing a polyoxymethylene-polyurethane alloy, which comprises reacting together a polyisocyanate; a short chain polyol having a molecular weight of 62 to 350; and a long chain polyol having a molecular weight of 400 to 5,000 in amounts to provide a NCO/OH ratio of 0.9 to 1.2, in the presence of an oxymethylene homo- or copolymer in an amount to constitute 40 to 90% by weight of the alloy.

The process of the invention can be carried out in a melt system. For example, it can be practiced by kneading in a two-roll mill, a Banbury mixer, a pressure kneader or an extruder having single or multiple screws. Generally, it is carried out at a temperature between 100 and 250 °C, preferably in the range of about 150 to 230 °C as the most readily operable temperature for a POM melt.

By forming PU in this manner within the melted POM system, there is obtained an alloy having a structure in which POM and PU are homogeneously formulated or partially copolymerized or subjected to entanglement of chains, in the form of a soft material excellent in impact resistance without the good characteristics of POM having been lost.

Also, the alloy obtained according to the process of the invention is excellent in workability, and its key feature resides in that impact resistance of the molded product is extremely good.

Although it is possible to react only a long chain polyol with a polyisocyanate without use of a short chain polyol, the urethanization can be completed only with difficulty in this case, the composition is tacky on the surface, interlaminer peeling is liable to occur during molding and mechanical strength is inferior.

According to the invention, a POM-PU alloy is obtained in one step from POM and the starting materials constituting Pin, and a significant feature resides in that no difficult dispersing and kneading operations are required. For this reason, the POM-PU alloy can be obtained more efficiently and economically than by the methods of the prior art.

The product can be utilized in many fields and also can be used for large scale constructions materials.

The polyisocyanate may be a diisocyanate for example 2,4-and 2,6-tolylenediisocyanate, m- and p-phenylenediisocyanate, 1-chlorophenylene-2,4-diisocyanate, 1,5-naphthalenediisocyanate, methylenebisphenylene-4,4'-diisocyanate, m- and p-xylylenediisocyanate, hexamethylenediisocyanate, lysinediisocyanate, 4,4'-methylenebis(cyclohexylisocyanate), isophoronediicosyanate and trimethylhexamethylenediisocyanate; a triisocyanate for example, 1,6,11-undecanetriisocyanate, lysine ester triisocyanate and 4-isocyanatemethyl-1,8,octamethyl diisocyanate; or a higher polyfunctional isocyanate such as polyphenyl methane polyisocyanate; and dimers and trimers of these polyisocyanate compounds; and compounds having terminal isocyanate groups obtained by the reaction of the above polyisocyanates with active hydrogen compounds such as short chain polyols, long chain polyols, water or amino compounds.

Alternatively as the polyisocyanates may be blocked polyisocyanates stabilized by blocking the above polyisocyanates with a blocking agent such as active methylene compounds, oximes, lactams, phenols, alkylphenols or basic nitrogen-containing compounds and which regenerate isocyanate groups by heating.

Further, several polyisocyanates can be used as a mixture, or as a solution.

The short chain polyol may be an aliphatic, alicyclic, aromatic, substituted-aromatic or heterocyclic

hydroxy compound containing two, three, four or more hydroxy groups for example, 1,2-ethanediol, 1,2-propanediol, 3-methyl-1,5-pentanediol, 1,4-butanediol, butenediol, 1,6-hexanediol, 1,10-decamethylenediol, 2,5-dimethyl-2,5-hexanediol, neopentyl glycol, diethylene glycol, 1,4-cyclohexane dimethanol, bis(β-hydroxyethoxy)benzene, p-xylenediol, dihydroxyethyltetrahydrophthalate, trimethylolpropane, glycerine, 2-methylpropane-1,2,3-triol, 1,2,6-hexanetriol and pentaerythritol, and amino alcohols such as ethanolamine, and methyldiethanolamine.

The long chain polyol may be a polyester polyol, polyether polyol, polycarbonate polyol, vinyl polyol, diene polyol, castor oil polyol, silicone polyol, polyolefin polyol or a copolymer thereof.

These long chain polymers have molecular weights ranging from 400 to 5,000 preferably from 500 to 3,000.

Examples of polyester polyols having terminal hydroxyl groups include those obtained by the reaction between dicarboxylic acids such as succinic acid, glutaric acid, adipic acid, azelaic acid, sebacic acid, dodecanoic acid, phthalic anhydride, isophthalic acid, tetrahydrophthalic anhydride, hexahydrophthalic anhydride, maleic anhydride, fumaric acid and itaconic acid, and polyhydroxy compounds selected from the short chain polyols described above.

A polyester polyol having terminal hydroxyl groups can be also obtained by the reaction between a lactone such as β-propiolactone, pivalolactone, δ-valerolactone, β-methyl-δ-valerolactone, ε-caprola ctone,methyl-ε-caprolactone, dimethyl-ε-caprolactone and trimethyl-ε-caprolactone, and a polyhydroxy compound selected from the short chain polyols described above.

The polyether polyol may be polytetramethylene glycol, polyethylene glycol, polypropylene glycol, or a copolymer thereof.

The polycarbonate polyol may be obtained by transesterification between a polyhydroxy compound selected from the short chain polyols described above and a diaryl carbonate, a dialkyl carbonate or an ethylene carbonate. For example, poly-1,6-hexamethylene carbonate and poly-2,2'-bis(4-hydroxyhexyl)-propane carbonate are industrially produced and readily available.

Polycarbonate polyols can be obtained by the so-called phosgene method (or the solvent method).

Vinyl polyols such a acrylic polyols obtained by copolymerization of an acrylic monomer having hydroxyl groups such as β-hydroxyethyl acrylate and β-hydroxyethylmethacrylate, with an acrylic acid ester; polybutadiene polyols such as poly(1,4-butadiene) and poly(1,2-butadiene); castor oil polymers such as polypropylene glycol ricinoleate; silicone polyols; and polyolefinic polyols can also be used.

Several of the above short chain and long chain polyols can be used in combination.

The polyoxymethylene polymer used in the process of the invention may be one which is prepared by continuous gas phase, liquid phase, solid phase or solution surface gas phase polymerization of purified formaldehyde or mass polymerization of trioxane.

For example, there may be employed a white polymer with uniform polymerization degree which is produced by polymerization by blowing formaldehyde into a solution of a quaternary ammonium salt, a quaternary phosphonium salt or a tertiary sulfonium salt as initiator and other components in an inert organic solvent.

The polyoxymethylene is preferably subjected to stabilization by an end group etherification, esterification or urethanization.

The polyoxymethylene copolymer used in the process of the invention may be one which is produced by, for example, copolymerization of trioxane with one of various cyclic ethers having at least two adjacent carbon atoms, such as ethylene oxide and dioxlane. The oxymethylene copolymer obtained may be a polymer having recurring units of the general formula:

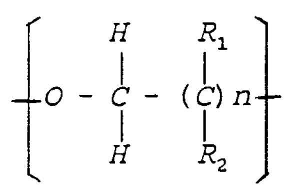

wherein each of $R_1$ and $R_2$ is selected from hydrogen, lower alkyl and halo-substituted lower alkyl, and n is zero or an integer of 1 to 3, and n is zero in from 85 to 99.9 mole percent of the recurring units. Each lower alkyl preferably has one or two carbon atoms.

The term "copolymer" means a polymer containing two or more different monomeric units, including

terpolymers, tetrapolymers and higher multi-component polymers.

The oxymethylene polymer and the oxymethylene copolymer may incorporate antioxidants, thermal stabilizers, and pigments. Further oxymethylene polymers coupled with dissimilar organic polymers can be used.

The polyisocyanate, the short chain polyol, the long chain polyol, and POM can be used in various proportions so as to control the properties of the composition obtained, but the amount of POM is 40 to 90%, based on the total.

The molar ratio of the short chain polyol to the long chain polyol is preferably 0.1 to 20, more preferably 0.1 to 1.5 for obtaining a soft composition with especially good impact resistance. Further, although it may differ depending on the long chain polyol employed, the mean molecular weight of the short chain polymer and the long chain polymer is preferably from 450 to 4,000.

The polyisocyanate is used in an amount to provide a NCO/OH ratio based on the total of the short chain polyol and the long chain polyol, of 0.9 to 1.2. By making the NCO/OH ratio 1.3 or higher, excessive NCO groups will undergo crosslinking to make a structure approximate to a thermosetting resin. In contrast, when the ratio of NCO/OH is less than 0.5, the molecular weight of PU is insufficiently high and the product obtained does not have the desired mechanical strength and tends to have surface tackiness.

Additives can be optionally incorporated and may include stabilizers, lubricants, fillers, colorants, and other resins reactive or non-reactive with isocyanate.

For enhancing the reaction rate, if necessary a conventional urethanization catalyst can be used. Suitable catalysts include tertiary amines such as triethylamine, tributylamine and triethanolamine, and organic tin compounds such as dibutyltindilaurate and stannous caprylate.

The catalyst may be added in an amount of 0.001 to 0.01% by weight based on the total of the short chain and long chain polyols and the polyisocyanate.

The following Examples illustrate the invention. In the Examples and Comparative examples, parts are all by weight.

Measurement of physical properties was performed at 23°C according to ASTM methods. The ASTM standard numbers of the respective measurement methods are as follows:

(1) Tensile test (tensile strength, elongation: D-638.

(2) Impact resistance, notched: D-256

Example 1

A mixture of 700 parts of Duracon M90-01 (polyoxymethlene copolymer, produced by Polyplastics K.K.), 11.4 parts of 1,4-butanediol (1,4-BD), 205 parts of Nippollane 4009 (polyesterdiol, molecular weight 1,000, produced by Nippon Polyurethane Industry), 83.6 parts of Millionate MT (diphenylmethane diisocyanate, produced by Nippon Polyurethane Industry), and 0.03 parts of dibutyltindilaurate (DBTDL) was kneaded in a pressure kneader (produced by Moriyama Seisakusho) at 160°C for one hour. The resin obtained was passed to a crushing machine to obtain flakes of about 3 mm square.

Using the flakes, a flat plate with a thickness of 2 mm was prepared by injection molding, and the tensile properties and the notched Izod impact strength were measured. The results are shown in Table 1.

Example 2

Example 1 was repeated but using 900 parts of Derlin 500 (polyoxymethylene polymer, produced by Du Pont), 4.4 parts of 1,4-BD, 80 parts of Nippollane 4042 (polyester diol, molecular weight 2,000, produced by Nippon Polyurethane Industry), 15.6 parts of 1,6-hexamethylene diisocyanate (1,6-HDI, produced by Nippon Polyurethane Industry), and 0.03 parts of DBTDL, to obtain resin flakes.

Examples 3 - 6

Example 1 was repeated except for varying the ingredients - Duracon M90-01, 1,4-BD, polyester (Nippollane 4056, a polyester diol, molecular weight 750, produced by Nippon Polyurethane Industry), polyisocyanate, and DBTDL - and their proportions as shown in Table 1, to obtain resin flakes.

Using the resins of Examples 2 - 6, physical properties were measured similar to those of Example 1. The results are shown in Table 1.

Comparative example 1

A mixture of 11.4 parts of 1,4-BD, 205 parts of Nippollane 4009, 83.6 parts of Millionate MT, and 0.03 parts of DBTDL was kneaded in a pressure kneader at 120°C for 1 hour. The polyurethane resin obtained was passed to a crushing machine to obtain flakes of about 3 mm square. The resin obtained had the following physical properties: a hardness of 83° (JIS A at 20°), a tensile strength of 430 kg/cm$^2$, and an elongation of 300% or more.

Comparative example 2

Example 1 was repeated except for using 700 parts of Duracon M90-91, 237 parts of Nippollane 4009, 63 parts of Millionate MT and 0.03 parts of DBTDL to obtain resin flakes. The resin obtained had surface tackiness. The physical properties are shown in Table 1.

Comparative example 3

A mixture of 700 parts of Duracon M90-01, 300 parts of the polyurethane resin obtained in Comparative example 1, and 4 parts of Millionate MT was kneaded in a pressure kneader at 160°C for 1 hour. Otherwise, the procedure of Example 1 was repeated to give resin flakes. The physical properties are shown in Table 1.

Table 1

| | No. | Example 1 | Example 2 | Example 3 | Example 4 | Example 5 | Example 6 |
|---|---|---|---|---|---|---|---|
| Ingredient | Duracon M90 - 01 | 700 | | 900 | 450 | 700 | 400 |
| | Derlin 500 | | 900 | | 450 | | |
| | 1, 4 - BD | 11.4 | 4.4 | 0.4 | 4.4 | 12 | 22.8 |
| | Nippollane 4056 | | | 6.0 | | | |
| | Nippollane 4009 | 205 | | | | | 410 |
| | Nippollane 4042 | | 80 | | 80 | 223 | |
| | Millionate MT | 83.6 | | | | 65 | 167.2 |
| | 1, 6-HDI | | 15.6 | 3.6 | 15.6 | | |
| | DBTDL | 0.03 | 0.01 | 0.03 | 0.01 | 0.03 | 0.06 |
| Physical properties | Tensile strength ($Kg/cm^2$) | 290 | 550 | 500 | 500 | 300 | 400 |
| | Tensile Elongation (%) | 300 | 60 | 95 | 80 | >300 | >300 |
| | Impact resistance Izod (Kg cm/cm) (Notched) | 50 | 14 | 12 | 12 | 60 | >100 |
| | Appearance of article | Good | Good | Good | Good | Good | Good |

Table 1 (Cont.)

| | No. | Comparative example 1 | Comparative example 2 | Comparative example 3 |
|---|---|---|---|---|
| Ingredient | Duracon M90 - 01<br>Derlin 500 | | 700 | 700 |
| | 1, 4 - BD | 11.4 | | |
| | Nippollane 4056<br>Nippollane 4009<br>Nippollane 4042 | 205 | 237 | 300 parts of the polyurethane of comparative example 1 |
| | Millionate MT<br>1, 6-HDI | 83.6 | 63 | 4 |
| | DBTDL | 0.03 | 0.03 | |
| Physical properties | Tensile strength (Kg/cm2)<br>Tensile Elongation (%) | 430<br>>300 | 280<br>150 | 300<br>150 |
| | Impact resistance Izod (Kg cm/cm) (Notched) | - | 12 | 10 |
| | Appearance of article | Slightly tacky | Tacky and interlaminer peeling | Wrinkle on surface |

The polyoxymethylene-polyurethane alloy prepared by the process of the invention has excellent hardness and good impact resistance, and also good moldability, and is therefore suitable for the manufacture of large scale injection molded products.

Further, the alloy according to the invention has the great advantage in that it can be produced at lower cost and higher efficiency than the polyoxymethylene-polyurethane product of the prior art.

By utilizing these properties, the alloy finds use in many industrial fields, and can be used in various gears or turbines receiving high impact, low noise driving gears in acoustic instruments, and also optimally for housings for electrical and electronic instruments and construction materials for use in automobiles.

## Claims

1. A process for producing a polyoxymethylene-polyurethane alloy, which comprises reacting together a polyisocyanate; a short chain polyol having a molecular weight of 62 to 350; and a long chain polyol having a molecular weight of 400 to 5,000 in amounts to provide a NCO/OH ratio of 0.9 to 1.2, in the presence of an oxymethylene homo- or copolymer in an amount to constitute 40 to 90% by weight of the alloy.

2. A process according to claim 1, wherein the short chain polyol and the long chain polyol are reacted together in a molar ratio of 0.1 to 20.

3. A process according to claim 1 or claim 2, wherein the short chain polyol and the long chain polyol are reacted together in such amounts that the polyol mean molecular weight is 450 to 4,000.

4. A process according to any one of claims 1 to 3, wherein the polyisocyanate is methylenebisphenylene-4-4'-diisocyanate.

5. A process according to any one of claims 1 to 3, wherein the polyisocyanate is hexamethylenediisocyanate.

6. A process according to any one of claims 1 to 5, wherein the short chain polyol is 1,4-butanediol.

## Revendications

1. Procédé de production d'un alliage du type polyoxyméthylène-polyuréthanne, qui consiste à faire réagir ensemble un polyisocyanate ; un polyol à chaîne courte ayant un poids moléculaire de 62 à 350 ; et un polyol à chaîne longue ayant un poids moléculaire de 400 à 5000 en quantités correspondant à un rapport NCO/OH de 0,9 à 1,2, en présence d'un homopolymère ou d'un copolymère oxyméthylénique en une quantité constituant 40 à 90 % en poids de l'alliage.

2. Procédé suivant la revendication 1, dans lequel le polyol à chaîne courte et le polyol à chaîne longue sont amenés à réagir ensemble dans un rapport molaire de 0,1 à 20.

3. Procédé suivant la revendication 1 ou la revendication 2, dans lequel le polyol à chaîne courte et le polyol à chaîne longue sont amenés à réagir ensemble en quantités telles que le poids moléculaire moyen du polyol soit de 450 à 4000.

4. Procédé suivant l'une quelconque des revendications 1 à 3, dans lequel le polyisocyanate est le méthylène-bis-phénylène-4,4'-diisocyanate.

5. Procédé suivant l'une quelconque des revendications 1 à 3, dans lequel le polyisocyanate est l'hexaméthylènediisocyanate.

6. Procédé suivant l'une quelconque des revendications 1 à 5, dans lequel le polyol à chaîne courte est le 1,4-butanediol.

## Patentansprüche

1. Verfahren zur Herstellung einer Polyoxymethylenpolyurethan-Legierung, bei dem ein Polyisocyanat, ein kurzkettiges Polyol mit einem Molekulargewicht von 62 bis 350 und ein langkettiges Polyol mit einem Molekulargewicht von 400 bis 5000 in Mengen, die ein NCO/OH-Verhältnis von 0,9 bis 1,2 ergeben, in Gegenwart eines Oxymethylen-Homopolymers- oder Copolymers in einer Menge, die 40 bis 90 Gew.-% der Legierung ausmacht, zusammen umgesetzt werden.

2. Verfahren nach Anspruch 1, worin das kurzkettige Polyol und das langkettige Polyol in einem Molverhältnis von 0,1 bis 20 zusammen umgesetzt werden.

3. Verfahren nach Anspruch 1 oder 2, worin das kurzkettige Polyol und das langkettige Polyol in solchen Mengen, daß das mittlere Molekulargewicht des Polyols 450 bis 4000 beträgt, zusammen umgesetzt werden.

4. Verfahren nach einem der Ansprüche 1 bis 3, worin das Polyisocyanat Methylenbisphenylen-4-4'-diisocyanat ist.

5. Verfahren nach einem der Ansprüche 1 bis 3, worin das Polyisocyanat Hexamethylendiisocyanat ist.

6. Verfahren nach einem der Ansprüche 1 bis 5, worin das kurzkettige Polyol 1,4-Butandiol ist.